# EUROPEAN PATENT SPECIFICATION

(11) **EP 2 941 507 B1**
(45) Date of publication and mention of the grant of the patent: **10.06.2020**
(21) Application number: 14704653.6
(22) Date of filing: 07.01.2014
(51) Int. Cl.: E02F 7/10, F16L 11/04

(54) **METHOD FOR TRANSPORTING WATER COMPRISING SOIL PARTICLES THROUGH A PIPELINE**
VERFAHREN ZUM TRANSPORTIEREN VON WASSER MIT BODENPARTIKELN DURCH EINE ROHRLEITUNG
PROCÉDÉ DE TRANSPORT D'EAU CONTENANT DES PARTICULES DE TERRE À TRAVERS UNE CONDUITE

(30) Priority: 07.01.2013 BE 201300009
(43) Date of publication of application: 11.11.2015
(73) Proprietor: Baggerwerken Decloedt en Zoon, 8400 Oostende (BE)
(72) Inventor: DURT, Dominique Maria Colette Hubert, B-2640 Mortsel (BE)
(74) Representative: Brouwer, Hendrik Rogier
(86) International application number: PCT/IB2014/058095
(87) International publication number: WO 2014/106827

(56) References cited:
- WO-A1-03/081105
- DE-A1- 3 145 303
- FR-A1- 2 786 246
- JP-A- S6 413 921
- JP-U- S4 856 618
- US-A1- 2006 000 515
- US-A1- 2010 055 363
- US-A1- 2012 118 397
- BERG VAN DEN C H ET AL: "ZUM EINFLUSS DER GESCHWINDIGKEIT AUF DEN HYDRAULISCHEN TRANSPORT VON SAND UND KIES DURCH ROHRLEITUNGEN//THE EFFECTS OF VELOCITY ON THE HYDRAULIC TRANSPORT OF SAND AND GRAVEL THROUGH PIPELINES//INFLUENCE DE LA VITESSE SUR LE TRANSPORT HYDRAULIQUE DU SABLE", AUFBEREITUNGS-TECHNIK - MINERAL PROCESSING, BAUVERLAG BV GMBH, DE, vol. 46, no. 1/02, 1 January 2005 (2005-01-01), pages 10-22, XP001222901, ISSN: 1434-9302

## Description

The invention relates to a method for transporting water comprising soil particles through a pipeline. The invention likewise relates to a method for laying a pipeline for transporting water comprising soil particles, and a flexible peripheral body evidently intended for the methods.

A regularly employed technique for building and strengthening dikes, for the purpose of widening beaches (sand suppletion), raising land areas or constructing artificial islands, comprises of reclaiming sand. During reclamation water with sand and dredged slurry is pumped by a dredging vessel via steel conduits onto a reclamation site.

During reclamation of water comprising soil particles the process water flowing away from the reclamation site may not be discharged directly into a natural water basin, such as for instance the sea. This is because the water still comprises a suspension of relatively fine soil particles which could cloud the seawater and damage the environment. In order to remove the relatively fine soil particles from the water, the water can for instance be carried through a settling basin. The settling basin will however not generally connect directly to the reclamation site and the water comprising soil particles has to be pumped to the settling basin.

A known method for transporting the water comprising soil particles comprises transport thereof through a pipeline. According to the prior art pipelines are constructed from steel pipeline parts (usually of 12 m in length and with diameters of 500 mm and more) which are provided for coupling purposes with end flanges having bolt holes. A pipeline is obtained by laying a large number of such pipeline parts mutually in line, wherein the end surfaces of the end flanges make mutual contact. The pipeline parts are then coupled one by one by arranging bolts through the bolt holes and tightening them. The water is carried through the pipeline by applying a pressure difference between an inlet and an outlet of the pipeline. Since large distances often have to be covered, the inlet pressure in a pipeline, in relation to the large diameters, can be relatively high, for instance in the order of magnitude of 2 bar and more. These pressures are necessary to be able to reach the required high flow rates in the order of magnitude of 10,000 m³/hour and more. Steel conduits are found to be well able to withstand possible wear by the soil particles still present in the process water.

The known method is costly and extremely labour-intensive, but is applied a great deal because only coupled steel conduit parts are deemed able to meet the above stated requirements.

The present invention has for its object to provide an improved method for transporting water comprising soil particles through a pipeline.

Provided according to the invention is a method for transporting water according to independent claim 1.

Preferred embodiments are defined by the dependent claims.

It has been found that a relatively low pressure in the order of magnitude of 0.2 bar is sufficient to bring the peripheral body into the inflated state. In the inflated state the peripheral body has a throughflow area of at least 0.15 m². For a substantially circular cross-section this corresponds to a minimum diameter of 440 mm. The use of the flexible peripheral body makes it possible to lay a pipeline for a fraction of the cost price of a pipeline consisting of coupled steel pipeline parts. Surprisingly, it is found that a peripheral body according to the invention can cope with the pressures and flow rates required for transporting water comprising soil particles through a pipeline, and is moreover found to be sufficiently wear-resistant.

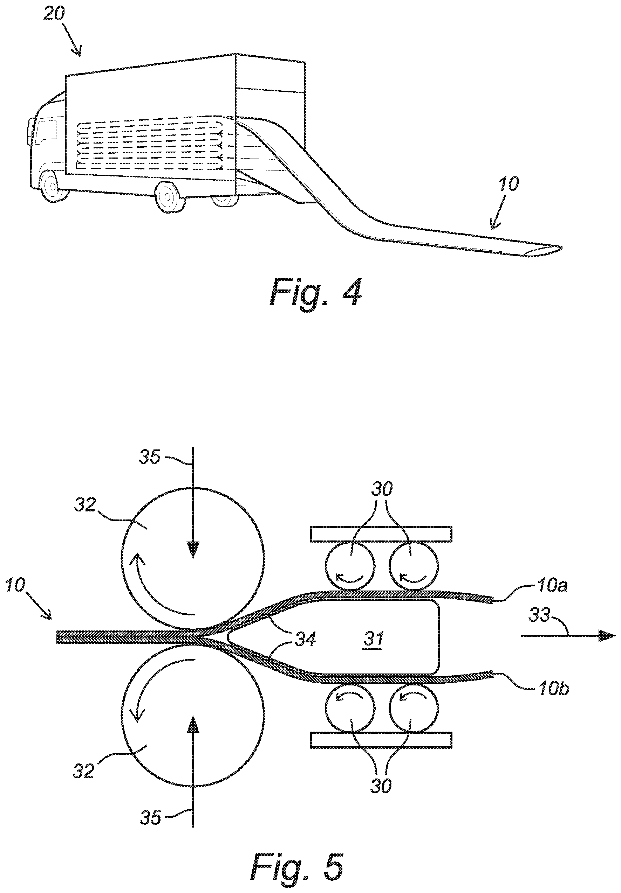

It is noted that from US 2006/0000515 A1 the use is known of a floating flexible pipeline for emptying a manure lagoon. The floating pipeline comprises flexible hoses coupled to each other. The pipeline is inflated with air. According to [0015] suitable flexible hoses have a relatively limited diameter of for instance 30 cm (12 inches) and a working pressure lying between about 3.5 bar (50 psi) and 21 bar (300 psi). The pipeline according to figure 4 has an estimated overall length of about 100 m (340 feet). In the context of the present description of the invention the term "substantially" is understood to mean more than 90% of the indicated value or property.

The fixed costs include among others the purchase of the pipes, transport to the site and installation of the pipeline. It will be apparent that for a pipeline manufactured according to the invention from plastic foil each of these costs will be lower than for a steel pipeline. In addition to the fixed costs, the most important variable costs are associated with the pumping of the water through the conduit. These costs include the consumption of fuel and oils, possible hire costs, maintenance of the pump means and the like.

Depending on the total volume of water comprising soil particles to be pumped in a desired period of time, an optimum distribution is possible between the fixed and variable costs. The number of pump means required and the consumption thereof depends on, among other factors, the selected flow velocity in the pipeline. For the same pump flow rate (volume of water comprising soil particles per unit time) it is generally possible to choose between on the one hand placing a relatively large number of parallel conduits, thereby creating a relatively large overall throughflow area, whereby the conduit flow velocity and so also the pump consumption will be low, or on the other hand placing a relatively low number of parallel conduits, thereby creating a relatively small overall throughflow area, whereby the conduit flow velocity, and so also the pump consumption, will be high.

It is advantageous to opt for a conduit flow velocity higher than a critical velocity at which the fine soil particles settle and the pipeline can eventually silt up. A bottom can comprise particles of different particle size. Gravel for instance thus comprises particles with an average particle size of more than 2 mm, sand comprises particles with an average particle size of between 0.063 mm and 2 mm, slurry comprises particles with an average particle size between 0.063 mm and 0.002 mm, and finally clay comprises particles with an average particle size of less than 0.002 mm. The method for transporting water comprising soil particles through a pipeline is aimed particularly at water comprising fine soil particles, this being understood to mean a suspension of soil particles with an average particle size of 0.1 mm in water.

An embodiment of the invention comprises a method wherein the peripheral body is manufactured from plastic foil reinforced with reinforcing fibres. This embodiment allows the inlet pressures to be increased so as to obtain a higher flow rate. Another embodiment relates to a method wherein the peripheral body is manufactured from a fabric of reinforcing fibres coated with plastic foil.

The plastic used in the plastic foil can comprise any known thermoplastic polymer. The plastic is preferably chosen from the group comprising polyurethanes, vinyl polymers such as for instance polyvinyl chloride, and polyolefins such as for instance polyethylene. A polyurethane foil and/or polyvinyl chloride foil are particularly suitable.

In yet another embodiment of the invention a method is provided wherein the reinforcing fibres comprise organic fibres, preferably polyester fibres, and/or inorganic fibres, preferably glass fibres. It is also possible to apply carbon fibres and/or UHMWPE fibres. These latter have the advantage that they have an exceptionally low density and will therefore display a certain buoyancy in floating pipelines.

The thickness of the plastic foil can likewise be chosen within broad limits, wherein this will depend on the requirements set in respect of pressure and flow rate. The greater the diameter chosen for the peripheral body, the thicker the wall of the peripheral body generally has to be. The wall thickness of the peripheral body preferably amounts to at least 0.8 mm, more preferably at least one millimetre and most preferably at least 1.2 mm.

In order that the advantages of the invention become still more manifest, an embodiment of the inventive method provides a plastic foil with a tensile strength amounting to at least 70 kN/m, more preferably at least 140 kN/m. Such strengths are for instance imparted by plastic foils reinforced (particularly) with polyester fibres, in particular polyvinyl chloride foils.

According to the invention continuous lengths of 1000 m and more are readily possible. In an embodiment in which the peripheral body is manufactured from a fabric of reinforcing fibres coated with plastic foil the length of the fabric on the roll is generally at least 2 km. Using a per se known loom fabric lengths of up to 10 km can be produced in one operation with full 'bobbins' of polyester thread. The continuous length of the peripheral body preferably amounts at least 1 km and most preferably at least 2 km. Such continuous lengths provide for a uniform strength over the trajectory of the pipeline and can be transported in standard ship containers.

In a further embodiment of the method according to the invention the pipeline comprises a number of the peripheral bodies, wherein the peripheral bodies run parallel to each other between the inlet and the outlet. Providing a pipeline in the form of a number of peripheral bodies with a throughflow area of at least 0.15 m² running between the inlet and the outlet and connected in parallel enables a relatively high flow rate to be achieved with a relatively low energy consumption, wherein a throughflow velocity is moreover achieved which exceeds the critical velocity. A typical critical velocity can for instance amount to 1 m/sec.

The number of peripheral bodies can be chosen within broad limits, depending on the conditions on site. A suitable embodiment of the method has the feature that the number of peripheral bodies lies between 1 and 15, more preferably between 2 and 10 and most preferably between 4 and 8.

The advantages of the invention become further manifest in an embodiment in which the pressure difference between the inlet and the outlet amounts to a maximum of 2 bar. By applying one or more peripheral bodies according to the invention only a small pressure difference is required to achieve the set objectives. In another embodiment the method according to the invention is characterized in that the pressure difference is applied by pump means with an (overall) capacity of a maximum of 1500 kW. The method according to the invention does indeed allow such a low energy consumption (relative to the pumped flow rate), this having great advantages in respect of CO2 emission and other environmental requirements.

The peripheral body can be formed from flat plastic foil. In such an embodiment a side edge of a flat foil is folded over in the transverse direction thereof onto the opposite side edge, and the side edges are attached to each other, preferably by an adhesive and/or welded connection. The welding or adhesion of the connecting seams can take place in the factory as well as at the site itself. A sufficient size of the overlap of the side edges to be connected (which corresponds to the width of the connecting seams) is preferably chosen so that the weld has a tensile strength greater than the intrinsic tensile strength of the plastic foil.

A peripheral body manufactured according to the above stated method has a substantially circular cross-section in the inflated state. In such an embodiment the connecting seams can run in the peripheral direction as well as in radial direction of the peripheral body. In the latter embodiment the connecting seams can run inward as well as outward, wherein the latter variant is recommended.

Yet another embodiment of the invention provides a method in which the cross-section of the peripheral body is divided in the inflated state into a number of compartments. Such an embodiment makes it possible to increase the average throughflow velocity at the same pressure difference without the flow rate being reduced appreciably.

In an embodiment the compartments can be formed by fixing to each other mutually opposite peripheral parts running in the longitudinal direction of the peripheral body, for instance by glueing and/or welding.

In an embodiment the pipeline can be constructed substantially from peripheral bodies coupled by means of coupling means. This is for instance the case when a pipeline of relatively great length is necessary, for instance more than 5 or 10 km long.

In an embodiment of the method the coupling means comprise steel and/or plastic pipes or pipe bends to which one or more peripheral bodies are connected. In an embodiment of the method peripheral bodies can likewise be coupled to each other, for instance by coupling means in the form of adhesive and/or welded connections. Welding can for instance take place by local heating with a resistance element or hot air or a highfrequency sound source, after which the two peripheral parts to be connected are pressed into each other with pressure rollers.

A pipeline constructed with the flexible peripheral body can extend over great distances of more than 10 km if this is necessary. It is advantageous here to provide an embodiment of the method in which the pressure difference between inlet and outlet and the throughflow area is chosen such that the soil particles in the pipeline remain substantially in suspension in the water. Settlement of the fine soil particles in the pipeline is hereby substantially avoided. Coupling means in the form of steel or plastic pipes and/or pipe bends avoid the peripheral body collapsing locally, this likewise helping to avoid the danger of settlement.

In another embodiment of the method for transporting water comprising soil particles through a pipeline, the pipeline constructed from the peripheral body runs substantially horizontally between inlet and outlet. This has the advantage that no additional static pressure is exerted on the pipeline.

It is further advantageous to characterize the method according to the invention in that the water comprising soil particles is collected in a feed water basin to which the inlet of the pipeline connects. The water comprising soil particles present in the feed basin provides for a static inlet pressure in the pipeline when the height of the water column is greater than the height position of the inlet. Because the feed basin has a certain height, the water column cannot exceed this basin height - the water will then overflow - whereby the inlet pressure remains limited. The feed water basin therefore acts as a pressure safeguard for the flexible pipeline.

In order to enable treatment of the water and make it dischargeable into a natural water basin an embodiment of the method has the feature that the water comprising soil particles is collected in a discharge water basin to which the outlet of the pipeline connects, in which discharge water basin the soil particles settle.

It is advantageous here for the outlet of the pipeline to connect to pump means which pump the water into the discharge basin. If desired, the part of the pipeline situated between the pump means and the discharge basin can be embodied as a steel conduit part, preferably with a height difference. In this embodiment the discharge basin can protrude partially above ground level, for instance by building a ring dike.

In an embodiment of the method the water present in the discharge water basin is subsequently carried to a natural basin once a substantial part of the soil particles has settled. A natural basin can comprise an (inland) sea, a river, a lake and the like.

An embodiment also relates to a method for laying a pipeline for transporting water comprising soil particles. The method comprises of providing a flexible peripheral body with a length of at least 1000 m manufactured from a plastic foil, wherein the peripheral body can be brought from a substantially flat state, in which peripheral parts lie on one another, to an inflated state in which the peripheral body has a throughflow area of at least 0.15 m², transporting the peripheral body in folded state to a site with a transport means and unrolling the peripheral body from the transport means along a desired trajectory for the pipeline. Depending on the thickness (strength) of the chosen plastic foil, 7 km of pipeline can for instance be transported in a single 40-foot standard ship container. Such transport is much simpler than transporting steel conduit parts pipe by pipe for the purpose of laying a steel pipeline kilometres in length. It will be apparent that, when laying the pipeline according to the above stated method, any embodiment of the peripheral body can be provided if desired.

Another embodiment of the method according to the invention has the feature that the transport means advances along the trajectory during unrolling.

An embodiment likewise relates to a flexible peripheral body with a length of at least 1000 m manufactured from plastic foil, wherein the peripheral body wherein the peripheral body can be brought from a substantially flat state, in which peripheral parts lie on one another, to an inflated state in which the peripheral body has a throughflow area of at least 0.15 m², the peripheral body evidently being intended for an embodiment of the invented method.

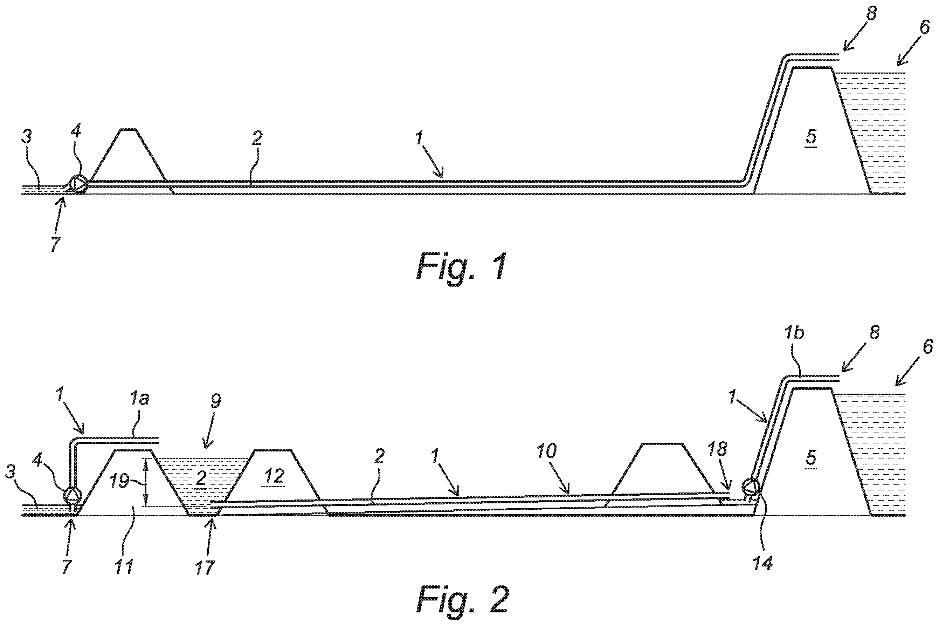

The method according to the invention will now be further elucidated on the basis of the following description of preferred embodiments and figures, without the invention being limited thereto. In the figures:
figure 1 is a schematic side view of a pipeline according to an embodiment of the invention;
figure 2 is a schematic side view of a pipeline according to another embodiment of the invention;
figure 3A is a schematic cross section of an embodiment of the peripheral body according to invention in inflated state;
figure 3B is a schematic cross section of another embodiment of the peripheral body according to the invention in inflated state;
figure 3C is a schematic cross-section of yet another embodiment of the peripheral body according to the invention in inflated state;
figure 4 is a schematic perspective view of a transport means with peripheral body in pressureless state according to an embodiment of the invention; and finally
figure 5 is a schematic side view of a device for manufacturing the peripheral body according to an embodiment of the invention.
Referring to figure 1, a method for transporting water 2 comprising soil particles through a pipeline 1 is illustrated. The water 2 comprising soil particles is pumped from a reclamation site 3 by means of a pump 4 through pipeline 1 to a discharge water basin in the form of settling basin 6 bounded by means of a ring dike 5. Pump 4 applies a pressure difference between an inlet 7 and an outlet 8 for water 2, wherein the pressure difference between inlet 7 and outlet 8 and the throughflow area is chosen such that the soil particles in pipeline 1 remain substantially in suspension in the water. The water remains standing in settling basin 6 for a determined period of time until the soil particles have substantially settled. The water present in settling basin 6 is carried for instance to a natural basin (not shown) such as the sea once a substantial part of the soil particles has settled.

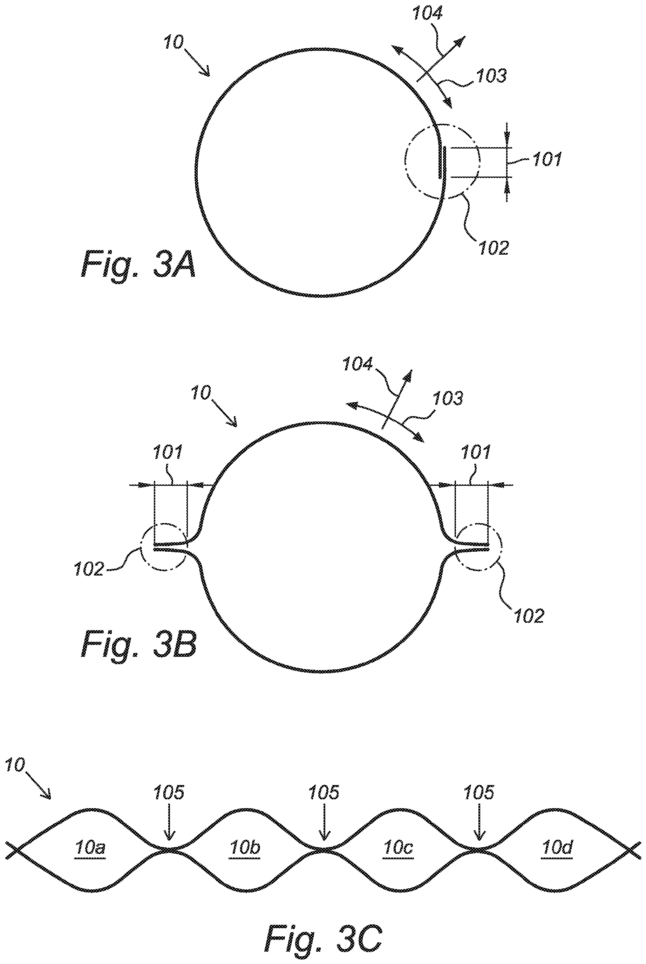

According to the invention at least a part of pipeline 1 comprises a flexible peripheral body 10 with a length 9 of at least 1000 m manufactured from plastic foil. Peripheral body 10 can be brought from a substantially flat state (shown in figure 4), in which peripheral parts (10a, 10b) lie on one another, to an inflated state (shown in figures 3A, 3B and 3C) in which the peripheral body has a throughflow area of at least 0.15 m². In a preferred embodiment peripheral body 10 is manufactured from a fabric of polyester fibres coated with polyurethane or polyvinyl chloride foil. Such a plastic foil has a tensile strength of about 150 kN/m.

In the embodiment of the method shown in figure 2 the water 2 comprising soil particles is collected in a feed water basin 9 to which an inlet 17 of the flexible pipeline in the form of peripheral body 10 connects. Feed basin 9 is bounded by dike bodies 11 and 12. The water column 19 comprising soil particles present in feed basin 9 provides for a static inlet pressure in pipeline 10. Because dike bodies (11, 12) have a certain height, the water column 19 cannot exceed this basin height because the water then overflows. The maximum inlet pressure thus remains limited by the water column 19 which corresponds to the height of dike bodies (11, 12), and feed water basin 9 therefore acts as a pressure safeguard for the flexible pipeline 10. In the embodiment shown in figure 2 pipeline 1 comprises three parts (1a, 10, 1b). Part 1a of pipeline 1 is situated between pump 4 and feed basin 9 and is embodied as a steel conduit part. This part 1a spans the height difference between reclamation site 3 and the top of dike body 11. Water 2 comprising soil particles is carried by pump 4 from reclamation site 3 via this conduit part 1a into feed basin 9. The part extending from feed basin 9 to discharge basin 6 comprises the flexible peripheral body 10. The pipeline part between inlet 17 and outlet 18 constructed from peripheral body 10 runs substantially horizontally. This has the advantage that no additional static pressure is exerted on pipeline part 10. Outlet 18 of the flexible pipeline part 10 connects to a second pump 14 which pumps the water 2 to discharge basin 6 via a third part 1b of pipeline 1 situated between second pump 14 and discharge basin 6. The third part 1b is likewise embodied as a steel conduit part and spans the height difference between outlet 18 and the top of ring dike 5. The steel parts (1a, 1b) of pipeline 1 can function as coupling means for pipeline parts comprising the peripheral body 10. The flexible pipeline part can consist of a continuous length of peripheral body 10, but can also be constructed from peripheral bodies 10 mutually coupled by means of adhesive or welded connections.

Referring to figures 3A and 3B, embodiments of a peripheral body 10 are shown wherein the cross-section of peripheral body 10 in the shown inflated state is substantially circular. Such a peripheral body 10 can be obtained by folding over a flat foil in the transverse direction thereof, wherein side edges of the foil are laid a determined distance over each other and form an overlap 101. Welded connecting seams 102 are formed by locally heating the overlapping portions 101. In the embodiment shown in figure 3A the connecting seam 102 runs in the longitudinal direction of peripheral body 10 and the overlapping portions 101 in the peripheral direction 103 of peripheral body 10. In the embodiment shown in figure 3B the connecting seams 102 run in the longitudinal direction of peripheral body 10 and the overlapping portions 101 in a radial direction 104 of peripheral body 10. Connecting seams 102 run outward here.

In the embodiment shown in figure 3C the cross-section of peripheral body 10 is divided in the shown inflated state into a number of compartments (10a, 10b, 10c,...). Such an embodiment makes it possible to increase the average throughflow velocity at the same pressure difference without the flow rate of the water 2 through compartments (10a, 10b, 10c,...) being reduced appreciably. The compartments (10a, 10b, 10c,...) are formed by fixing to each other, for instance by glueing and/or welding, mutually opposite peripheral parts 105 running in the longitudinal direction of peripheral body 10.

An embodiment likewise relates to a method for laying a pipeline 1 for transporting water 2 comprising soil particles. As shown in figure 4, the method comprises of providing a flexible peripheral body 10 with a length of at least 1000 m manufactured from a plastic foil, wherein the peripheral body 10 (or a plurality of peripheral bodies 10) is transported in folded state to a site with a transport means 20 and subsequently unrolled from transport means 20 along a desired trajectory for pipeline 1. By applying an inlet pressure the peripheral body is subsequently brought from the substantially flat state shown in figure 4, in which peripheral parts lie on one another, to the inflated state shown in figures 3A-3C in which peripheral body 10 has to have a throughflow area of at least 0.15 m². Transport means 4 moves along the desired trajectory of pipeline 1 during unrolling of peripheral body 10 onto a ground surface.

A pipeline manufactured according to the invention provides great advantages compared to the known pipelines. This is illustrated below, wherein the comparison is made with a known steel pipe conduit (Known Example A), a flexible conduit known from US 2006/0000515 A1 (Known Example B) and a pipeline according to the invention (Example I).

**Table 1: comparison of pipeline according to the invention to a known pipeline**

| | Known A | Known B | Example 1 |
|---|---|---|---|
| **Pipe material** | **Steel** | **Fire hose** | **Foil pipe** |
| Thickness (mm) | 12 | 1 | 1 |
| Yield stress [N/mm²] | 250 | | |
| Yield strength [N/mₚᵢₚₑ] | 3,000,000 | 119,700 | 144,000 |
| **Max. diameter [mm]** | **900** | **76** | **760** |
| Bursting pressure at max. diam. [Pa] | 6,666,667 | 3,150,000 | 378,947 |
| Bursting pressure at max. diam.[bar] | 66.7 | 31.5 | 3.8 |
| Safety factor [-] | 2.0 | 2.0 | 2.0 |
| Max. working pressure [bar] | 33.3 | 15.8 | 1.9 |
| Min. Flow rate [m³/s] | 4.0 | 4.0 | 4.0 |
| Critical velocity [m/s] | 1.0 | 1.0 | 1.0 |
| Min. Throughflow area [m²] | 4.0 | 4.0 | 4.0 |
| Max. Pressure single pump [bar] | 15 | 15 | 15 |
| | | | |

| *Pressure loss* | | | |
|---|---|---|---|
| Slurry density [kg/m³] | 1,050 | 1,050 | 1,050 |
| Friction factor λ [-] | 0.015 | 0.015 | 0.015 |
| Pressure loss at critical velocity [bar/km] | 0.1 | 1.0 | 0.1 |
| Distance [km] | 7 | 7 | 7 |
| | | | |

| **Pumping at maximum pressure:** | | | |
|---|---|---|---|
| ***This means minimum pipeline to purchase, but more pump power and fuel input*** | | | |
| | | | |
| Maximun frictional pressure loss [bar/km] | 4.8 | 2.3 | 0.3 |
| Corresponding velocity [m/s] | 7.4 | 1.5 | 1.6 |
| Number of pipes required [-] | 1 | 599 | 6 |
| Effective corresponding velocity [m/s] | 6.3 | 1.5 | 1.5 |
| Effective frictional pressure loss [bar/km] | 3.5 | 2.2 | 0.2 |
| Net pump power required [kW] | 9,769 | 6,291 | 631 |

Table 1 shows that for the same requirements in respect of minimum flow rate, minimum critical velocity and distance over which transport is necessary, a pipeline according to the invention needs only 10% of the power required for a pipeline as according to US 2006/0000515 A1, and only 6.5% of the power required for a steel pipeline.

Finally, figure 5 illustrates a per se known possible method for welding plastic foils (10a, 10b) to each other to form a peripheral body 10. Plastic foils (10a, 10b) are guided by means of guide rollers 30 over a heated wedge 31, wherein the plastic melts at least partially and forms melted layers 34, and are guided between pressure rollers 32 in the direction indicated with arrow 33, wherein plastic foils (10a, 10b) are welded onto each other under pressure 35. After cooling to below the melting point of the plastic a connecting seam is formed.

The invention is not limited to the above described exemplary embodiments and modifications can be made hereto to the extent they fall within the scope of the appended claims.

## Claims

1. Method for transporting water (2) comprising soil particles through a pipeline (1), wherein the pipeline (1) is provided between a reclamation site (3) for the soil particles containing water and another location (6) wherein a pressure difference is applied between an inlet (7) and an outlet (8) for the water (2), wherein the pipeline (1) comprises a flexible peripheral body (10) with a length of at least 1000 m manufactured from plastic foil, wherein the peripheral body is transported in folded state to a site with a transport means and unrolled from the transport means along a desired trajectory for the pipeline (1), and wherein the peripheral body (10) is brought from a substantially flat state, in which peripheral parts lie on one another, to an inflated state in which the peripheral body has a throughflow area of at least 0.15 m².

2. Method according to claim 1, wherein the location comprises a settling basin, adapted to remove relatively fine soil particles from the water by settling of the particles.

3. Method as claimed in claim 1 or 2, **characterized in that** the peripheral body is manufactured from plastic foil reinforced with reinforcing fibres.

4. Method as claimed in claim 3, **characterized in that** the peripheral body is manufactured from a fabric of reinforcing fibres coated with plastic foil.

5. Method as claimed in any of the foregoing claims, **characterized in that** the plastic comprises a thermoplastic polymer chosen from the group comprising polyurethanes, vinyl polymers such as for instance polyvinyl chloride, and polyolefins such as for instance polyethylene.

6. Method as claimed in any of the foregoing claims, **characterized in that** the reinforcing fibres comprise organic fibres, preferably polyester fibres, and/or inorganic fibres, preferably glass fibres.

7. Method as claimed in any of the foregoing claims, **characterized in that** the tensile strength of the plastic foil amounts to at least 70 kN/m, more preferably at least 140 kN/m.

8. Method as claimed in any of the foregoing claims, **characterized in that** the length of the peripheral body amounts to at least 2 km.

9. Method as claimed in any of the foregoing claims, **characterized in that** the pipeline comprises a number of the peripheral bodies, wherein the peripheral bodies run parallel to each other between the inlet and the outlet.

10. Method as claimed in claim 9, **characterized in that** the number lies between 1 and 15, more preferably between 2 and 10 and most preferably between 4 and 8.

11. Method as claimed in any of the foregoing claims, **characterized in that** the pipeline comprises peripheral bodies coupled by means of coupling means.

12. Method as claimed in claim 11, **characterized in that** the coupling means comprise steel and/or plastic pipes and/or welded or adhesive connections.

13. Method as claimed in any of the foregoing claims, **characterized in that** the water comprising soil particles is collected in a feed water basin to which the inlet of the pipeline connects.

14. Method as claimed in any of the foregoing claims, **characterized in that** the pressure difference between inlet and outlet and the throughflow area is chosen such that the soil particles in the pipeline remain substantially in suspension in the water.

15. Method as claimed in any of the foregoing claims, **characterized in that** the pressure difference amounts to a maximum of 2 bar.

16. Method as claimed in any of the foregoing claims, **characterized in that** the pressure difference is applied by pump means with a capacity of a maximum of 1500 kW.

17. Method as claimed in any of the foregoing claims, **characterized in that** the water comprising soil particles is collected in a discharge water basin to which the outlet of the pipeline connects, in which discharge water basin the soil particles settle.

18. Method as claimed in claim 17, **characterized in that** the outlet of the pipeline connects to pump means which pump the water into the discharge basin.

19. Method as claimed in any one of the foregoing claims, **characterized in that** the transport means advances along the trajectory during unrolling.

## Patentansprüche

1. Verfahren zum Transportieren von Wasser (2), das Bodenpartikel aufweist, durch eine Rohrleitung (1),
wobei die Rohrleitung (1) zwischen einem Gewinnungsstandort (3) für die Bodenpartikel, die Wasser enthalten, und einem anderen Ort (6) bereitgestellt ist, wobei eine Druckdifferenz zwischen einem Einlass (7) und einem Auslass (8) für das Wasser (2) angewendet wird, wobei die Rohrleitung (1) einen flexiblen Umfangskörper (10) mit einer Länge von mindestens 1000 m aufweist, der aus Kunststofffolie hergestellt ist, wobei der Umfangskörper in einem gefalteten Zustand mit einem Transportmittel an einen Standort transportiert wird und von dem Transportmittel entlang einer gewünschten Bahn für die Rohrleitung (1) abgewickelt wird, und
wobei der Umfangskörper (10) aus einem im Wesentlichen flachen Zustand, in dem Umfangsteile aufeinander liegen, in einen aufgeblasenen Zustand gebracht wird, in dem der Umfangskörper eine Durchflussfläche von mindestens 0,15 m² hat.

2. Verfahren nach Anspruch 1, wobei der Ort ein Absetzbecken aufweist, das geeignet ist, relativ feine Bodenpartikel aus dem Wasser zu entfernen, indem die Partikel sich absetzen.

3. Verfahren nach Anspruch 1 oder 2, **dadurch gekennzeichnet, dass** der Umfangskörper aus Kunststofffolie hergestellt ist, die mit Verstärkungsfasern verstärkt ist.

4. Verfahren nach Anspruch 3, **dadurch gekennzeichnet, dass** der Umfangskörper aus einem Stoff aus Verstärkungsfasern, die mit Kunststofffolie beschichtet sind, hergestellt ist.

5. Verfahren nach einem der vorhergehenden Ansprüche, **dadurch gekennzeichnet, dass** der Kunststoff ein thermoplastisches Polymer aufweist, das aus der Gruppe ausgewählt wird, die Polyurethane, Vinylpolymere, wie etwa zum Beispiel Polyvinylchlorid, und Polyolefine, wie etwa zum Beispiel Polyethylen, aufweist.

6. Verfahren nach einem der vorhergehenden Ansprüche, **dadurch gekennzeichnet, dass** die Verstärkungsfasern organische Fasern, bevorzugt Polyesterfasern, und/oder anorganische Fasern, bevorzugt Glasfasern, aufweisen.

7. Verfahren nach einem der vorhergehenden Ansprüche, **dadurch gekennzeichnet, dass** die Zugfestigkeit der Kunststofffolie mindestens 70 kN/m, bevorzugt mindestens 140 kN/m beträgt.

8. Verfahren nach einem der vorhergehenden Ansprüche, **dadurch gekennzeichnet, dass** die Länge des Umfangskörpers mindestens 2 km beträgt.

9. Verfahren nach einem der vorhergehenden Ansprüche, **dadurch gekennzeichnet, dass** die Rohrleitung eine Anzahl von Umfangskörpern aufweist, wobei die Umfangskörper parallel zueinander zwischen dem Einlass und dem Auslass verlaufen.

10. Verfahren nach Anspruch 9, **dadurch gekennzeichnet, dass** die Anzahl zwischen 1 und 15, bevorzugt zwischen 2 und 10 und am bevorzugtesten zwischen 4 und 8 liegt.

11. Verfahren nach einem der vorhergehenden Ansprüche, **dadurch gekennzeichnet, dass** die Rohrleitung Umfangskörper aufweist, die mittels Kopplungseinrichtungen gekoppelt sind.

12. Verfahren nach Anspruch 11, **dadurch gekennzeichnet, dass** die Kopplungseinrichtungen Stahl- und/oder Kunststoffrohre und/oder geschweißte oder Klebstoffverbindungen aufweisen.

13. Verfahren nach einem der vorhergehenden Ansprüche, **dadurch gekennzeichnet, dass** das Wasser, das Bodenpartikel aufweist, in einem Speisewasserbecken gesammelt wird, mit dem der Einlass der Rohrleitung verbunden ist.

14. Verfahren nach einem der vorhergehenden Ansprüche, **dadurch gekennzeichnet, dass** die Druckdifferenz zwischen Einlass und Auslass und die Durchflussfläche derart gewählt werden, dass die Bodenpartikel in der Rohrleitung im Wesentlichen in dem Wasser suspendiert bleiben.

15. Verfahren nach einem der vorhergehenden Ansprüche, **dadurch gekennzeichnet, dass** die Druckdifferenz maximal 2 Bar beträgt.

16. Verfahren nach einem der vorhergehenden Ansprüche, **dadurch gekennzeichnet, dass** die Druckdifferenz durch Pumpeinrichtungen mit einer Kapazität von maximal 1500 kW angewendet wird.

17. Verfahren nach einem der vorhergehenden Ansprüche, **dadurch gekennzeichnet, dass** das Wasser, das die Bodenpartikel aufweist, in einem Ablaufwasserbecken, mit dem der Auslass der Rohrleitung verbunden ist, gesammelt wird, wobei die Bodenpartikel sich in diesem Ablaufwasserbecken absetzen.

18. Verfahren nach einem der vorhergehenden Ansprüche, **dadurch gekennzeichnet, dass** der Auslass der Rohrleitung mit Pumpeinrichtungen verbunden ist, die das Wasser in das Ablaufbecken pumpen.

19. Verfahren nach einem der vorhergehenden Ansprüche, **dadurch gekennzeichnet, dass** das Transportmittel während des Abwickelns entlang der Bahn vorrückt.

## Revendications

1. Procédé de transport d'eau (2) comprenant des particules de terre à travers une canalisation (1), dans lequel la canalisation (1) est prévue entre un site de récupération (3) pour l'eau contenant des particules de terre et un autre emplacement (6),
dans lequel une différence de pression est appliquée entre un orifice d'entrée (7) et un orifice de sortie (8) pour l'eau (2), dans lequel la canalisation (1) comprend un corps périphérique flexible (10) avec une longueur d'au moins 1000 m fabriquée à partir d'une feuille en plastique, dans lequel le corps périphérique est transporté à l'état plié jusqu'à un site avec un moyen de transport et déroulé du moyen de transport le long d'une trajectoire souhaitée pour la canalisation (1), et
dans lequel le corps périphérique (10) est amené d'un état sensiblement plat, dans lequel des parties périphériques se trouvent les unes sur les autres, à un état gonflé dans lequel le corps périphérique présente une aire de débit d'au moins 0,15 m².

2. Procédé selon la revendication 1, dans lequel l'emplacement comprend un bassin de décantation, adapté pour éliminer des particules de terre relativement fines de l'eau par décantation des particules.

3. Procédé selon la revendication 1 ou 2, **caractérisé en ce que** le corps périphérique est fabriqué à partir d'une feuille en plastique renforcée de fibres de renforcement.

4. Procédé selon la revendication 3, **caractérisé en ce que** le corps périphérique est fabriqué à partir d'une étoffe de fibres de renforcement enduite d'une feuille en plastique.

5. Procédé selon l'une quelconque des revendications précédentes, **caractérisé en ce que** le plastique comprend un polymère thermoplastique choisi dans le groupe comprenant des polyuréthanes, des polymères de vinyle, tels que par exemple le polychlorure de vinyle, et des polyoléfines telles que par exemple le polyéthylène.

6. Procédé selon l'une quelconque des revendications précédentes, **caractérisé en ce que** les fibres de renforcement comprennent des fibres organiques, de préférence des fibres de polyester, et/ou des fibres inorganiques, de préférence des fibres de verre.

7. Procédé selon l'une quelconque des revendications précédentes, **caractérisé en ce que** la résistance à la traction de la feuille en plastique s'élève à au moins 70 kN/m, de manière davantage préférée au moins 140 kN/m.

8. Procédé selon l'une quelconque des revendications précédentes, **caractérisé en ce que** la longueur du corps périphérique s'élève à au moins 2 km.

9. Procédé selon l'une quelconque des revendications précédentes, **caractérisé en ce que** la canalisation comprend un nombre des corps périphériques, dans lequel les corps périphériques se présentent parallèles les uns aux autres entre l'orifice d'entrée et l'orifice de sortie.

10. Procédé selon la revendication 9, **caractérisé en ce que** le nombre se trouve entre 1 et 15, de manière davantage préférée entre 2 et 10 et de manière préférée entre toutes entre 4 et 8.

11. Procédé selon l'une quelconque des revendications précédentes, **caractérisé en ce que** la canalisation comprend des corps périphériques couplés au moyen de moyens de couplage.

12. Procédé selon la revendication 11, **caractérisé en ce que** les moyens de couplage comprennent des tuyaux en acier et/ou en plastique et/ou des raccords soudés ou adhésifs.

13. Procédé selon l'une quelconque des revendications précédentes, **caractérisé en ce que** l'eau comprenant des particules de terre est recueillie dans un bassin d'eau d'alimentation auquel l'orifice d'entrée de la canalisation est raccordé.

14. Procédé selon l'une quelconque des revendications précédentes, **caractérisé en ce que** la différence de pression entre l'orifice d'entrée et l'orifice de sortie et l'aire de débit est choisie de sorte que les particules de terre dans la canalisation restent sensiblement en suspension dans l'eau.

15. Procédé selon l'une quelconque des revendications précédentes, **caractérisé en ce que** la différence de pression s'élève à 2 bar au maximum.

16. Procédé selon l'une quelconque des revendications précédentes, **caractérisé en ce que** la différence de pression est appliquée par des moyens de pompe dotés d'une capacité de 1500 kW au maximum.

17. Procédé selon l'une quelconque des revendications précédentes, **caractérisé en ce que** l'eau comprenant des particules de terre est recueillie dans un bassin d'eau d'évacuation auquel l'orifice de sortie de la canalisation est raccordé, bassin d'eau d'évacuation dans lequel les particules de terre décantent.

18. Procédé selon la revendication 17, **caractérisé en ce que** l'orifice de sortie de la canalisation est raccordé à des moyens de pompage qui pompent l'eau dans le bassin d'évacuation.

19. Procédé selon l'une quelconque des revendications précédentes, **caractérisé en ce que** le moyen de transport avance le long de la trajectoire pendant le déroulement.
